**Europäisches Patentamt**

**European Patent Office**

**Office européen des brevets**

(11) Veröffentlichungsnummer: **0 060 969**
**B1**

(12) **EUROPÄISCHE PATENTSCHRIFT**

(45) Veröffentlichungstag der Patentschrift:
18.12.85

(51) Int. Cl.⁴: **H 01 F 7/16**, B 41 J 7/84,
F 16 K 31/08, H 02 K 33/18

(21) Anmeldenummer: 82100256.5

(22) Anmeldetag: 15.01.82

(54) **Magnetantriebssystem zur Erzeugung linearer Bewegungen.**

(30) Priorität: 21.03.81 DE 3111222

(43) Veröffentlichungstag der Anmeldung:
29.09.82 Patentblatt 82/39

(45) Bekanntmachung des Hinweises auf die Patenterteilung:
18.12.85 Patentblatt 85/51

(84) Benannte Vertragsstaaten:
CH DE FR GB IT LI NL

(56) Entgegenhaltungen:
DE - A - 1 614 727
DE - A - 2 013 051
DE - A - 2 229 332
DE - A - 2 709 074
DE - B - 1 051 589
FR - A - 691 477
FR - A - 2 087 617

Die Akte enthält technische Angaben, die nach dem Eingang der Anmeldung eingereicht wurden und die nicht in dieser Patentschrift enthalten sind.

(73) Patentinhaber: **VACUUMSCHMELZE GMBH, Grüner Weg 37 Postfach 2253, D-6450 Hanau 1 (DE)**

(72) Erfinder: **Menzel, Klaus, Dipl.-Ing., Remstalerstrasse 26, D-1000 Berlin 28 (DE)**
Erfinder: **Erd, Ludwig, Dipl.-Ing., Havelbergerstrasse 17, D-1000 Berlin 21 (DE)**
Erfinder: **Marinescu, Marlene, Dr.-Ing., Mailänderstrasse 19, D-6000 Frankfurt/Main 70 (DE)**

## Beschreibung

Die Erfindung betrifft Magnetantriebssysteme zur Erzeugung linearer Bewegungen ausgehend von folgenden Merkmalen:

a) ein stabförmiger Anker ist in den beiden Enden eines den Anker umfassenden Jochkörpers koaxial und längsbeweglich gelagert;

b) Jochkörper und Anker bestehen überwiegend aus weichmagnetischem Material, so dass ein magnetischer Kreis gebildet wird;

c) in den Enden des Jochkörpers sind mittig Öffnungen ausgebildet, die zusammen mit der Aussenfläche des Ankers sich in radialer Richtung erstreckende, schmale Spalte als Flussübergangsstellen zwischen Anker (1) und den Enden des Jochkörpers (5) bilden;

d) in dem aus Jochkörper und Anker gebildeten magnetischen Kreis ist mindestens ein Dauermagnet so angeordnet, dass er im Anker einen von beiden Enden des Ankers zur Ankermitte oder umgekehrt gerichteten magnetischen Fluss bewirkt;

e) es ist mindestens eine an eine Spannungsquelle anschliessbare elektrische Spule derart auf den Anker gewickelt, dass je nach Richtung eines die Spule durchfliessenden Stromes im Zusammenwirken mit dem in den Anker eintretenden oder ihn verlassenden Dauermagnetfluss eine Kraft in die eine oder die andere Richtung der Längserstreckung des Ankers auf diesen ausgeübt wird.

Ein derartiges Antriebssystem ist aus der französischen Patentschrift 691 477 bekannt. Hier ist auf dem Mittelteil eines zylinderförmigen Ankers eine Spule angeordnet, die sich zwischen zwei weiteren zur Erzeugung eines Magnetfeldes dienenden Spulen bewegen kann. Das Ganze ist von einem Jochkörper umgeben, der einen von beiden Enden des Ankers zur Ankermitte oder umgekehrt gerichteten magnetischen Fluss führt.

Bei dieser Anordnung ist die Auslenkkraft in der einen oder anderen Richtung im wesentlichen von der Richtung des Stromes in der mit dem Anker verbundenen Spule abhängig. Falls die Spule nicht mit Strom beaufschlagt wird, bleibt der Anker in seiner Lage stehen, es sei denn, dass Schwerkraft oder Federkräfte zusätzlich auf den Anker wirken.

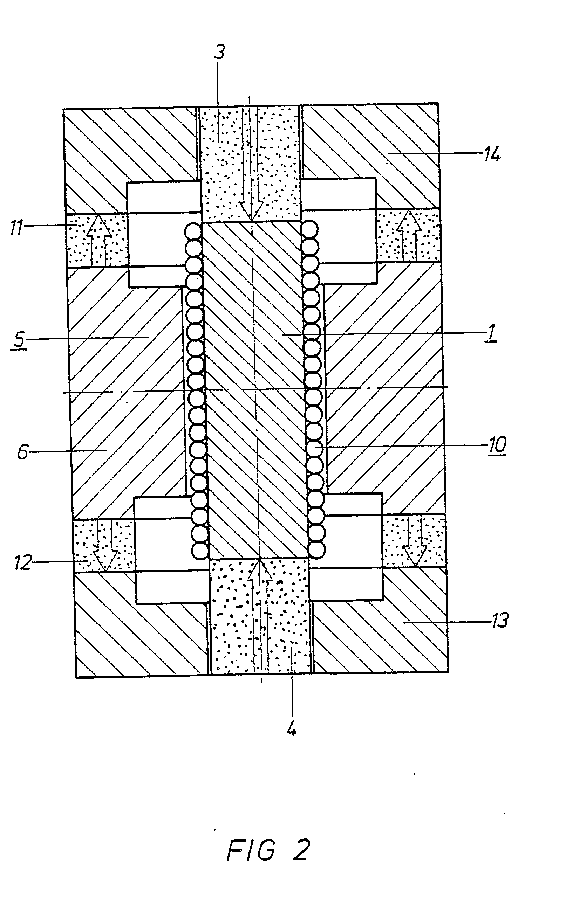

Ein Magnetantriebssystem für ein Druckorgan eines Schnelldruckers ist in der DE-A-2 939 829 beschrieben. Hier ist (Fig. 2) ein Anker von einem Joch umgeben, das in radialer Richtung magnetisierte Dauermagnete enthält, die im Anker einen Fluss von Ankermitte zu den Ankerenden bzw. umgekehrt erzeugen. Zu beiden Seiten sind Spulen vorgesehen, bei deren Erregung der von den Dauermagneten induzierte Fluss so überlagert wird, dass der Fluss in einem Teil des Ankers verstärkt und in dem anderen vermindert wird. Hierdurch entsteht auf den Anker eine Krafteinwirkung, die diesen in Längsrichtung auf die eine oder andere Spule in Bewegung setzt.

Bei einer derartigen Antriebsvorrichtung verstärken sich die von der Spule auf den Anker ausgeübten magnetischen Kräfte mit zunehmender Auslenkung.

Ausserdem wirken auf die Anker der bekannten Anordnungen dann erhebliche Kräfte in radialer Richtung, wenn diese nicht absolut in dem Joch zentriert sind.

Aufgabe der vorliegenden Erfindung ist es, ein Magnetantriebssystem mit einer auf einem Anker befestigten Spule anzugeben, bei dem die Lagerung des längsbeweglichen Ankers in einem umgebenden Jochkörper einen geringen Aufwand erfordert und bei dem ausreichend Rückstellkräfte nach einer Auslenkung in Richtung auf die Ruhelage wirken, ohne dass zur Rückstellung mechanische Federn erforderlich sind.

Für diese Aufgabe werden zwei Lösungen angegeben.

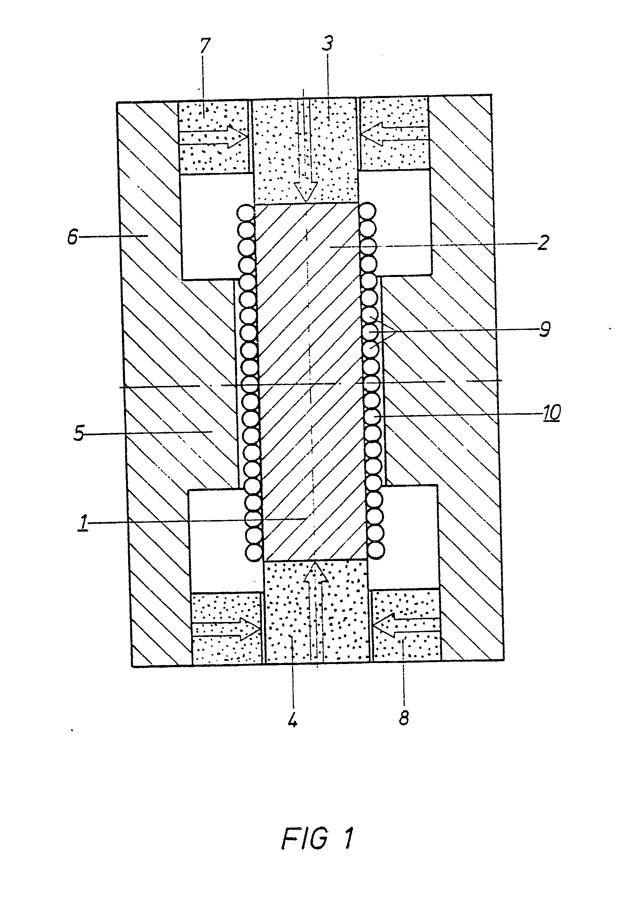

Die erste besteht darin, dass die in die in den beiden Enden der Jochkörpers ausgebildeten Öffnungen hineinragenden Enden des Ankers als axial magnetisierte Dauermagnete ausgebildet sind, die sich mit gleichnamigen Polen derart gegenüberliegen, dass sie den im Anker von beiden Enden des Ankers zur Ankermitte oder umgekehrt gerichteten magnetischen Fluss verstärken (Fig. 1, 2).

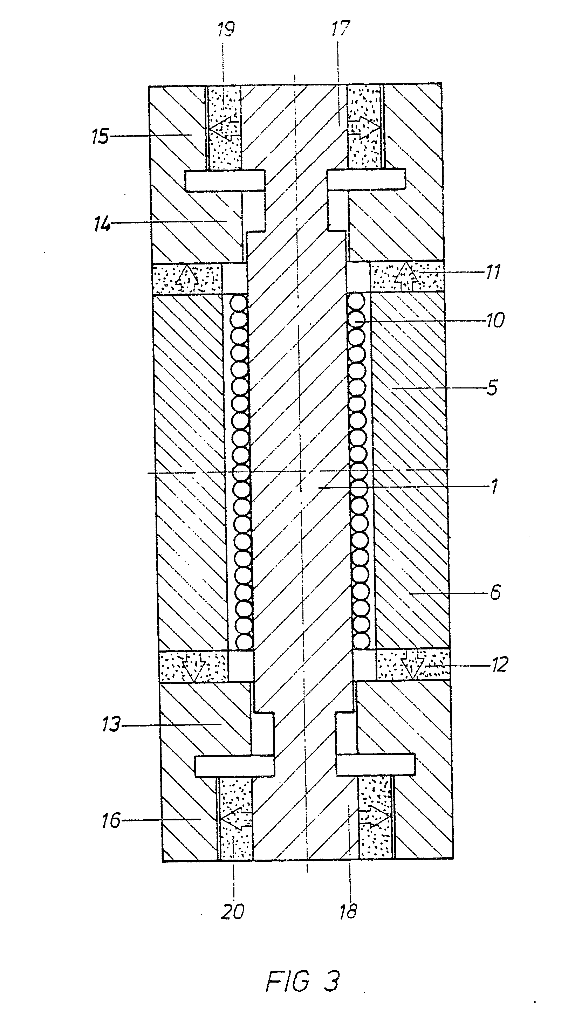

Die zweite Lösung besteht darin, dass die Länge des weichmagnetischen Teils des Jochkörpers in Längsrichtung des Ankers grösser ist als die Länge des weichmagnetischen Teiles des Ankers, derart, dass bei nicht ausgelenktem Anker die Enden des weichmagnetischen Teiles des Ankers, soweit sie die schmalen, als Flussübergangsstellen wirkenden Spalte ergeben, nur zum Teil in die mittigen Öffnungen der Enden des Jochkörpers hineinragen (Fig. 3).

Die Fig. 1 bis 3 zeigen Schnitte von Ausführungsbeispielen der erfindungsgemässen Lösungen.

In Fig. 1 besteht der stabförmige Anker 1 aus einem mittleren Teil 2 aus weichmagnetischem Material, an dessen Stirnseiten sich zylindrische Dauermagnete 3 und 4 anschliessen. Umgeben ist dieser Anker von einem Jochkörper 5, der aus einem ebenfalls aus weichmagnetischem Material bestehenden Mittelteil 6 und radial magnetisierten ringförmigen Dauermagneten 7 und 8 besteht. In die ringförmigen Dauermagnete 7 und 8 ragen die zylinderförmig ausgebildeten Dauermagnete 3 und 4 des Ankers 1 hinein. Die Pfeile im Bereich der Dauermagnete deuten deren Magnetisierungsrichtung an. Hieraus ist zu erkennen, dass der Dauermagnetfluss an den Enden des Ankers in diesen eintritt und den Anker im mittleren Teil 2 in radialer Richtung wieder verlässt. Der mittlere Teil 2 des Ankers 1 trägt die Windungen 9 einer Erregerspule 10.

Die Dauermagnete an beiden Enden von Anker 1 und Jochkörper 5 bewirken durch ihre Magnetisierung bei jeder Auslenkung des Ankers aus der dargestellten Ruhelage, dass auf den Anker eine Kraft ausgeübt wird, in diesen in die dargestellte Ruhelage zurückzubewegen versucht. Hierdurch überwiegen in einem Teil die abstossenden Kräfte zwischen den Dauermagneten 7 und 3 bei Auslenkung nach oben bzw. die abstossenden Kräfte zwischen den Dauermagneten 8 und 4 bei einer Auslenkung des Ankers nach unten in Fig. 1. Der Jochkörper 5 ist zylinderförmig ausgebildet und besitzt im Mittelteil einen Bereich mit verringertem Durchmesser, so dass die Kraftlinien des magnetischen Flusses im wesentlichen senkrecht zur Richtung des Stromes in den Windungen 9 der Spule 10 verlaufen.

Die zwischen Anker und Jochkörper wirkenden Kräfte sind im wesentlichen dem Strom in der Spule proportional. Die Auslenkung des Ankers 1 mit der darauf befestigten Spule 10 gegenüber dem Jochkörper 5 ist abhängig von der Richtung des Stromes.

Fig. 2 zeigt eine Anordnung, bei der auf radial magnetisierte Dauermagnete verzichtet werden kann. Während der Anker so aufgebaut ist wie derjenige in Fig. 1, besitzt der Jochkörper 5 zwei ringförmige, in axialer Richtung magnetisierte Dauermagnete 11 und 12, die an den Mittelteil 6 des Jochkörpers 5 angrenzen. Zur Führung des magnetischen Flusses bis in die Nähe der Dauermagnete 3 und 4 dienen weitere weichmagnetische Jochteile 13 und 14.

Für die zentrische Lagerung des Ankers 1 relativ zum Jochkörper 5 sind die in radialer Richtung wirkenden Kräfte zu berücksichtigen. Sowohl in Fig. 1 als auch in Fig. 2 treten an beiden Enden des Ankers 1 die Kraftlinien durch den möglichst klein zu haltenden Luftspalt in einen der Dauermagnete 3 oder 4 ein. Derartige Dauermagnete haben — besonders wenn sie aus sehr gutem dauermagnetischem Material bestehen — eine kleine relative Permeabilität, die beispielsweise bei Dauermagneten aus Kobalt und Seltenen Erden etwa bei $\mu_r = 1,05$ liegt.

Damit verhalten sich die Dauermagnete 3 und 4 hinsichtlich der radialen Flussverteilung des Ankers etwa wie Luft, so dass nur geringe radiale, nach aussen gerichtete Kräfte auftreten und von der Lagerung des Ankers aufgefangen werden müssen.

Dieser Effekt ist beim Ausführungsbeispiel nach Fig. 3 nicht mehr gegeben, allerdings zeigt dafür das Ausführungsbeispiel nach Fig. 3 einen besonders einfachen Aufbau. Der Jochkörper 5 ist ähnlich wie in Fig. 2 aufgebaut. Hier besteht der Mittelteil 6 des Jochkörpers 5 nur noch aus einem Zylinder mit einer Längsbohrung, in der der Anker 1 mit der Spule 10 gelagert ist. Der Anker 1 besitzt einen weichmagnetischen Teil, der zur Erzielung von nennenswerten Rückstellkräften nur zum Teil in die mittleren Öffnungen der Jochteile 13 und 14 hineinragt.

Diese Ausführungsform zeichnet sich durch eine besonders einfache Konstruktion gegenüber den bisher beschriebenen Ausführungsbeispielen aus, fordert jedoch eine sorgfältigere Lagerung des Ankers in den Öffnungen der Jochteile 13 und 14, da bei einer Auslenkung des Ankers aus der Mittellage, bedingt durch das weichmagnetische Material des Ankers und des Jochkörpers, sich höhere Auslenkungskräfte ergeben.

Ein besonderer Vorteil für diese Anordnung ergibt sich dann, wenn zur Lagerung des Ankers 1 beim Ausführungsbeispiel nach Fig. 3 sowohl die Jochteile 13 und 14 als auch der Anker 1 nach aussen hin Verlängerungen 15, 16 bzw. 17, 18 aufweisen und wenn durch weitere Dauermagnete 19, 20 erreicht wird, dass in den Luftspalten zwischen den Verlängerungen 15 und 17 bzw. 16 und 18 abstossende Kräfte auftreten. Diese Wirkung wird beim Ausführungsbeispiel nach Fig. 3 mit radial magnetisierten ringförmigen Dauermagneten 19 und 20 erreicht. Dabei bestehen die Verlängerungen 17 und 18 des Ankers 1, abgesehen von den Dauermagneten 19 und 20, aus nichtmagnetischem Material, so dass durch die Lagerung eine Beeinflussung der Funktionsweise des Magnetantriebssystems vermieden wird.

**Patentansprüche**

1. Magnetantriebssystem zur Erzeugung linearer Bewegungen ausgehend von folgenden Merkmalen:

a) ein stabförmiger Anker (1) ist in den beiden Enden eines den Anker umfassenden Jochkörpers (5) koaxial und längsbeweglich gelagert;

b) Jochkörper (5) und Anker (1) bestehen überwiegend aus weichmagnetischem Material, so dass ein magnetischer Kreis gebildet wird;

c) in den Enden des Jochkörpers (5) sind mittige Öffnungen ausgebildet, die zusammen mit der Aussenfläche des Ankers sich in radialer Richtung erstreckende, schmale Spalte als Flussübergangsstellen zwischen Anker (1) und den Enden des Jochkörpers (5) bilden;

d) in dem aus Jochkörper (5) und Anker (1) gebildeten magnetischen Kreis ist mindestens ein Dauermagnet (7, 8; 11, 12) so angeordnet, dass er im Anker (1) einen von beiden Enden des Ankers zur Ankermitte oder umgekehrt gerichteten magnetischen Fluss bewirkt;

e) es ist mindestens eine an eine Spannungsquelle anschliessbare elektrische Spule (10) derart auf den Anker (1) gewickelt, dass je nach Richtung eines die Spule (10) durchfliessenden Stromes im Zusammenwirken mit dem in den Anker (1) eintretenden oder ihn verlassenden Dauermagnetfluss eine Kraft in die eine oder die andere Richtung der Längserstreckung des Ankers (1) auf diesen ausgeübt wird,

dadurch gekennzeichnet, dass die in die in den beiden Enden des Jochkörpers (5) ausgebildeten Öffnungen hineinragenden Enden des Ankers (1) als axial magnetisierte Dauermagnete (3, 4) ausgebildet sind, die sich mit gleichnamigen Polen derart gegenüberliegen, dass sie den im Anker von beiden Enden des Ankers zur Ankermitte oder umgekehrt gerichteten magnetischen Fluss verstärken (Fig. 1, 2).

2. Magnetantriebssystem zur Erzeugung linearer Bewegungen ausgehend von folgenden Merkmalen:

a) ein stabförmiger Anker ist in den beiden Enden eines den Anker umfassenden Jochkörpers (5) koaxial und längsbeweglich gelagert;

b) Jochkörper (5) und Anker (1) bestehen überwiegend aus weichmagnetischem Material, so dass ein magnetischer Kreis gebildet wird;

c) in den Enden des Jochkörpers (5) sind mittige Öffnungen ausgebildet, die zusammen mit der Aussenfläche des Ankers sich in radialer Richtung erstreckende, schmale Spalte als Flussübergangsstellen zwischen Anker (1) und Jochkörper (5) bilden;

d) in dem aus Jochkörper (5) und Anker (1) gebildeten magnetischen Kreis ist mindestens ein Dauermagnet (11, 12) so angeordnet, dass er im Anker (1) einen von beiden Enden des Ankers zur Ankermitte oder umgekehrt gerichteten magnetischen Fluss bewirkt;

e) es ist mindestens eine an eine Spannungsquelle anschliessbare elektrische Spule (10) derart auf den Anker (1) gewickelt, dass je nach Richtung eines die Spule (10) durchfliessenden Stromes im Zusammenwirken mit dem in den Anker (1) eintretenden oder ihn verlassenen Dauermagnetfluss eine Kraft in die eine oder die andere Richtung der Längserstreckung des Ankers (1) auf diesen ausgeübt wird,

dadurch gekennzeichnet, dass die Länge des weichmagnetischen Teils des Jochkörpers (5) in Längsrichtung des Ankers (1) grösser ist als die Länge des weichmagnetischen Teils des Ankers (1), derart, dass bei nicht ausgelenktem Anker (1) die Enden des weichmagnetischen Teils des Ankers (1), soweit sie die schmalen, als Flussübergangsstellen wirkenden Spalte ergeben, nur zum Teil in die mittligen Öffnungen der Enden des Jochkörpers (5) hineinragen (Fig. 3).

3. Magnetantriebssystem nach Anspruch 1 oder 2, dadurch gekennzeichnet, dass zur Erzeugung des von beiden Enden des Ankers zur Ankermitte oder umgekehrt gerichteten magnetischen Flusses in den den Anker (1) umgebenden Jochkörper (5) zwei axial magnetisierte ringförmige Dauermagnete (11, 12) eingesetzt sind.

4. Magnetantriebssystem nach Anspruch 2, dadurch gekennzeichnet, dass die zur Erzeugung des von beiden Enden des Ankers (1) zur Ankermitte oder umgekehrt gerichteten magnetischen Flusses vorgesehenen Dauermagnete (11, 12) sich nur im Jochkörper (5) befinden, dass zur radialen Zentrierung des weichmagnetischen Ankers (1) dieser nach beiden Seiten verlängert ist, dass die Verlängerungen (17, 18) des Ankers (1) Magnete (19, 20) tragen, die eine radiale Flussrichtung erzeugen, und dass entsprechende Verlängerungen (15, 16) des Jochkörpers die Verlängerungen (17, 18) des Ankers umgeben und so magnetisiert sind, dass in dem Luftspalt zwischen den Verlängerungen (17, 18 und 15, 16) des Ankers (1) und des Jochkörpers (5) abstossende magnetische Kräfte wirken (Fig. 3).

## Claims

1. A magnetic drive system for the production of linear movements, based on the following features;

a) a rod-shaped armature (1) is coaxially mounted so as to be longitudinally movable in the two ends of a yoke body (5) which surrounds the armature;

b) the yoke body (5) and the armature (1) consist mainly of soft-magnetic material, so that a magnetic circuit is formed;

c) the ends of the yoke body (5) have central openings which, together with the outer surface of the armature, define narrow gaps extending in the radial direction as flux transition points between the armature (1) and the ends of the yoke body (5);

d) the magnetic circuit formed by the yoke body (5) and the armature (1) includes at least one permanent magnet (7, 8; 11, 12) which is arranged in such manner that it produces a magnetic flux in the armature (1) which is directed from the two ends of the armature towards the centre of the armature or vice versa;

e) at least one electrical coil (10), which can be connected to a voltage source, is wound onto the armature (1) in such manner that, depending upon the direction of a current flowing through the coil (10), in co-operation with the permanent magnetic flux which enters or leaves the armature (1), a force is exerted on the armature (1) in one or other longitudinal direction thereof,

characterised in that the ends of the armature which project into the openings formed in the two ends of the yoke body (5) are formed as axially magnetised permanent magnets (3, 4) like poles of which are arranged opposite one another in such manner that they amplify the magnetic flux in the armature which is directed from the two ends of the armature towards the centre of the armature or vice versa (Fig. 1, 2).

2. A magnetic drive system for the production of linear movements, based on the following features:

a) a rod-shaped armature is coaxially mounted so as to be longitudinally movable in the two ends of a yoke body (5) which surrounds the armature;

b) the yoke body (5) and the armature (1) consist mainly of soft-magnetic material so that a magnetic circuit is formed;

c) the ends of the yoke body (5) have central openings which, together with the outer surface of the armature, define narrow gaps extending in the radial direction as flux transition points between the armature (1) and the yoke body (5);

d) the magnetic circuit formed from the yoke body (5) and armature (1) includes at least one permanent magnet (11, 12) arranged in such manner that in the armature (1) it produces a magnetic flux which is directed from the two ends of the armature towards the centre of the armature or vice versa;

e) at least one electrical coil (10), which can be connected to a voltage source, is wound onto the armature (1) in such manner that, depending upon the direction of a current flowing through the coil (10), in co-operation with the permanent magnetic flux which enters or leaves the armature (1), a force is exerted upon the armature (1) in one or other longitudinal direction thereof,

characterised in that the length of the soft-magnetic part of the yoke body (5) in the longitudinal direction of the armature (1) is greater than the length of the soft-magnetic part of the armature (1), such that when the armature (1) is not shifted, the ends of the soft-magnetic part of the armature (1) (where they define the narrow gaps serving as flux transition points) project only partially into the central openings of the ends of the yoke body (5) (Fig. 3).

3. A magnetic drive system as claimed in Claim 1 or Claim 2, characterised in that the magnetic flux which is directed from the two ends of the armature towards the centre of the armature or vice versa is produced by inserting two axially magnetised, annular permanent magnets (11, 12) into the yoke body (5) which surrounds the armature (1).

4. A magnetic drive system as claimed in Claim 2, characterised in that the permanent magnets (11, 12) which are provided for the production of the magnetic flux which is directed from the two ends of the armature (1) towards the centre of the armature of vice versa, are located only in the yoke body (5); that for the radial centring of the soft-magnetic armature (1) the armature is extended at both ends; that the extended portions (17, 18) of the armature (1) carry magnets (19, 20) which produce a radial direction of flux; and that corresponding extended portions (15, 16) of the yoke body surround the extended portions (17, 18) of the armature and are magnetised in such a way that repulsive magnetic forces are active in the air gap between the extended portions (17, 18 and 15, 16) of the armature (1) and of the yoke body (5) (Fig. 3).

**Revendications**

1. Système d'entraînement magnétique permettant d'obtenir des déplacements linéaires, système dans lequel:

a) une armature (1) en forme de barreaux est montée coaxialement et en étant mobile longitudinalement dans les deux extrémités d'une culasse (5) entourant cette armature;

b) la culasse (5) et l'armature (1) sont principalement constituées d'un matériau magnétique doux de sorte qu'un circuit magnétique est établi,

c) des ouvertures médianes sont ménagées dans les extrémités de la culasse (5), ces ouvertures délimitant avec la surface externe de l'armature, des fentes étroites en direction radiale constituant des emplacements de passage du flux entre l'armature (1) et les extrémités de la culasse (5),

d) dans le circuit magnétique formé à partir de la culasse (5) et de l'armature (1), un aimant permanent (7, 8; 11, 12) est disposé de façon telle qu'il engendre un flux magnétique dirigé des deux extrémités de l'armature vers le milieu de l'armature ou inversement,

e) au moins une bobine électrique (10) susceptible d'être raccordée à une source de tension est enroulée sur l'armature (1) de façon que selon le sens d'un courant parcourant cette bobine (10) et coopérant avec le flux d'aimant permanent pénétrant dans l'armature (1) ou bien la quittant, un effort est exercé sur l'armature (1) dans l'un ou l'autre sens de l'étendue longitudinale de celle-ci, système caractérisé en ce que les extrémités de l'armature (1), pénétrant dans les ouvertures ménagées aux deux extrémités de la culasse (5), sont constituées par des aimants permanents (3, 4) magnétisés axialement, et qui se font face avec des pôles de même polarité, de sorte qu'ils renforcent le flux magnétique orienté dans l'armature des extrémités de celle-ci vers son milieu ou inversement (figs 1, 2).

2. Système d'entraînement magnétique permettant d'obtenir des déplacements linéaires, système dans lequel:

a) une armature (1) en forme de barreaux est montée coaxialement et en étant mobile longitudinalement dans les deux extrémités d'une culasse (5) entourant cette armature,

b) la culasse (5) et l'armature (1) sont principalement constituées d'un matériau magnétique doux, de sorte qu'un circuit magnétique est établi,

c) des ouvertures médianes sont ménagées dans les extrémités de la culasse (5), ces ouvertures délimitant avec la surface externe de l'armature, des fentes étroites en direction radiale constituant des emplacements de passage du flux entre l'armature (1) et les extrémités de la culasse (5),

d) dans le circuit magnétique formé à partir de la culasse (5) et de l'armature (1), un aimant permanent (11, 12) est disposé de façon telle qu'il engendre un flux magnétique dirigé des deux extrémités de l'armature vers le milieu de l'armature ou inversement,

e) au moins une bobine électrique (10) susceptible d'être raccordée à une source de tension est enroulée sur l'armature (1) de façon que selon le sens d'un courant parcourant cette bobine (10) et coopérant avec le flux d'aimant permanent pénétrant dans l'armature (1) ou bien la quittant, un effort est exercé sur l'armature (1) dans l'un ou l'autre sens de l'étendue longitudinale de celle-ci, système caractérisé en ce que la longueur de la partie, en matériau magnétique doux, de la culasse (5), en direction longitudinale de l'armature (1) est plus grande que la longueur de la partie, en matériau magnétique doux, de l'armature (1), de sorte que lorsque cette armature (1) n'est pas déviée, les extrémités de cette partie en matériau magnétique doux de l'armature (1), dans la mesure où elles ménagent les fentes étroites jouant le rôle d'emplacement de passage du flux, ne pénètrent que partiellement dans les ouvertures médianes des extrémités de la culasse (5), (fig. 3).

3. Système d'entraînement magnétique selon la revendication 1 ou 2, caractérisé en ce que, pour engendrer le flux magnétique orienté des deux extrémités de l'armature vers le milieu de celle-ci ou inversement, deux aimants permanents annulaires (11, 12) magnétisés axialement, sont insérés dans la culasse (5) entourant l'armature (1).

4. Système d'entraînement magnétique selon la revendication 2, caractérisé en ce que les aimants permanents (11, 12) prévus pour engendrer le flux magnétique orienté des deux extrémités de l'armature (1) vers le milieu de celle-ci ou inversement, se trouvent seulement dans la culasse (5), et que pour centrer radialement l'armature (1) en matériau magnétique doux, cette armature est prolongée des deux côtés et ces prolongements (17, 18) de l'armature (1) portent des aimants (19, 20) engendrant une orientation radiale du flux magnétique, tandis que des prolongements correspondants (15, 16) de la culasse entourent les prolongements (17, 18) de l'armature et sont magnétisés de façon que dans l'entrefer entre ces prolongements (17, 18 et 15, 16) de l'armature (1) de la culasse (5) il s'exerce des efforts magnétiques de répulsion.

FIG 1

*FIG 2*

FIG 3